# EUROPÄISCHE PATENTANMELDUNG

(11) **EP 2 848 847 A1**
(43) Veröffentlichungstag der Anmeldung: **18.03.2015**
(21) Anmeldenummer: 14184888.7
(22) Anmeldetag: 16.09.2014
(51) Int. Cl.: F16K 31/60, F16K 11/00

(54) **Selbstschlussarmatur mit einer Betätigungsanordnung**

(30) Priorität: 16.09.2013 DE 102013015269
(71) Anmelder: Franke Aquarotter GmbH, 14974 Ludwigsfelde (DE)
(72) Erfinder: Knörck, Thomas, 14547 Beelitz (DE)
(74) Vertreter: Lemcke, Brommer & Partner Patentanwälte Partnerschaft mbB

(57) **Zusammenfassung**

Die Erfindung betrifft eine Selbstschlussarmatur mit einer Betätigungsanordnung zur Auslösung eines Wasserflusses. Die Betätigungsanordnung weist einen Drehgriff (4) auf. Der Drehgriff (4) wirkt mit einem verschiebbar angeordneten Bauteil (14) zum Drücken und/oder Ziehen eines Auslöseelements (16) zusammen.

## Beschreibung

Die Erfindung betrifft eine Selbstschlussarmatur mit einem Auslöseelement zur Auslösung eines Wasserflusses und mit einer Betätigungsanordnung zur Betätigung des Auslöseelements.

Selbstschlussarmaturen sind wassersparend, da das Schließen automatisch erfolgt. Ein Hauptanwendungsgebiet sind öffentliche sanitäre Anlagen.

Bei herkömmlichen Selbstschlussarmaturen wird durch Drücken eines Betätigungsgliedes über ein Ventil eine bestimmte Wassermenge abgegeben. Das Ventil schließt nach einer bestimmten Zeit selbsttätig und stoppt den Wasserfluss.

In der EP 1 967 776 A2 wird eine Selbstschlussarmatur mit einem Betätigungsglied in Form einer Kappe beschrieben. Beim Drücken der Kappe wird ein Hilfsventil geöffnet. Dies führt zum Öffnen eines Hauptventils. Dadurch wird ein Wasserfluss freigegeben.

Eine Druckbetätigung zum Auslösen eines Ventils einer Selbstschlussarmatur ist aber unter bestimmten Voraussetzungen ungünstig. Insbesondere wenn ein Druckknopf in Längsrichtung des Ventils angeordnet ist, kann dies z. B. bei in Horizontalrichtung eingebauten Ventilen mit folglich an der Seite angebrachtem Druckknopf für einen Benutzer schwierig sein, diesen Druckknopf zu betätigen.

Es sind Selbstschlussarmaturen mit einem elektronischen Auslöseknopf bekannt. Auch Sensorarmaturen, welche die Anwesenheit eines Benutzers erfassen und den Wasserfluss auslösen, sind bekannt. Diese elektronischen Systeme sind kostspieliger und störungsanfälliger als mechanische Systeme.

Aufgabe der Erfindung ist es, eine Selbstschlussarmatur anzugeben, die nicht durch herkömmliche Druckknöpfe oder elektronische Systeme ausgelöst wird und die bei bestimmten Einbausituationen, insbesondere bei in Horizontalrichtung eingebauten Ventilen besser zugängliche Betätigungsanordnungen ermöglicht. Die Armatur soll leicht zu bedienen sein und optisch ansprechend wirken. Darüber hinaus soll sich die Konstruktion als platzsparend erweisen und preiswert herzustellen sein. Die Selbstschlussarmatur soll zuverlässig funktionieren und wartungsarm sein.

Diese Aufgabe wird erfindungsgemäß dadurch gelöst, dass die Betätigungsanordnung einen Drehgriff mit einer Drehachse aufweist, der mit einem in einer Richtung fluchtend oder parallel zur Drehachse verschiebbar angeordneten Bauteil zum Drücken und/oder Ziehen eines Auslöseelements zusammenwirkt.

Erfindungsgemäß wird die Selbstschlussarmatur durch Verdrehen eines Drehgriffs ausgelöst. Dieser Drehgriff wirkt mit einem verschiebbar angeordneten Bauteil zusammen. Die am Drehgriff ausgeübte Rotationsbewegung um die Drehachse wird in eine axiale Verschiebung in der genannten Richtung umgesetzt, die fluchtend oder parallel zur Drehachse ist. Durch die axiale Verschiebung des Bauteils wird ein Auslöseelement gedrückt und/oder gezogen, wodurch der Wasserfluss freigegeben wird.

Der Drehgriff kann vom Benutzer entweder unmittelbar von Hand verdreht werden oder es kann eine indirekte Auslösung der Drehbewegung erfolgen. Bei einer besonders vorteilhaften Ausführung der Erfindung ist dazu am Drehgriff eine Querschnittsänderung, insbesondere ein Vorsprung oder eine Vertiefung zur Tastbetätigung angeordnet. Der Vorsprung ermöglicht es dem Benutzer, eine Rotationsbewegung des Drehgriffs durch Tastbetätigung des Vorsprungs beispielsweise mit dem Daumen oder einem Finger auszulösen.

Bei einer besonders bevorzugten Ausführung der Erfindung ist der Drehgriff mit dem Vorsprung einstückig ausgebildet. Dabei erweist es sich als günstig, wenn der Vorsprung ein quaderförmiges Profil aufweist.

Statt des Vorsprungs kann der Drehgriff auch eine Querschnittsreduzierung bzw. Vertiefung, z.B. eine Griffmulde aufweisen, in die der Benutzer beim Verdrehen eingreifen kann.

Bei einer besonders vorteilhaften Ausführung der Erfindung ist das axial verschiebbar angeordnete Bauteil hohlzylinderartig ausgebildet. Dabei erweist es sich als günstig, wenn das Bauteil einen inneren Bereich mit ansteigenden Flächen aufweist. Diese Flächen können in dem Hohlzylinder angeordnet sein. Die geneigten Flächen bilden in dem hohlzylindrischen Bauteil schraubengangartige Abschnitte. Als besonders günstig erweist es sich, wenn die Flächen spiralförmige Steigungen aufweisen. Innerhalb des hohlzylindrischen Bauteils steigen die Flächen entlang des Umfangs an.

Bei einer bevorzugten Ausführung der Erfindung weist die Betätigungsanordnung einen Einsatz auf, der vorzugsweise zwischen dem Drehgriff und dem verschiebbaren Bauteil angeordnet ist und dabei aber auch mit dem Drehgriff oder dem verschiebbaren Bauteil - gegebenenfalls einstückig-verbunden sein kann. Dabei erweist es sich als günstig, wenn der Einsatz einen inneren Bereich aufweist, der in das axial verschiebbare Bauteil eingreift. Dieser Bereich ist vorzugsweise hülsenartig ausgebildet.

Bei einer besonders vorteilhaften Variante der Erfindung weist der Einsatz an den Stirnseiten des hülsenartigen Bereichs ansteigende Flächen auf. Bei einer bevorzugten Ausführung der Erfindung wirken die geneigten Flächen des Einsatzes mit den geneigten Flächen des verschiebbar angeordneten Bauteils zusammen. Dabei ist der Einsatz vorzugsweise drehfest mit dem Drehgriff verbunden. Bei einer Verdrehung des Drehgriffs dreht sich der Einsatz mit. Dabei wirken die Flächen des Einsatzes auf die Flächen des verschiebbaren Bauteils ein. Das Einwirken der Flächen des Einsatzes auf die Flächen des Bauteils bewirkt eine Verschiebung in axialer Richtung. Durch die Verschiebung des Bauteils wird ein Auslöseelement gedrückt beziehungsweise gezogen, welches den Wasserfluss auslöst.

Der Einsatz ist vorzugsweise gegen eine Verschiebung in axialer Richtung geführt. Dadurch behält er bei einer Verdrehung seine axiale Position bei. Da der Drehgriff mit dem Einsatz verbunden ist, wird der Drehgriff ebenfalls nicht in axialer Richtung verschoben. Die Führung gegen eine Verschiebung in axialer Richtung führt dazu, dass bei einer Verdrehung des Drehgriffes die Flächen des Einsatzes auf das verschiebbare Bauteil einwirken und dieses in axialer Richtung verschieben.

Das verschiebbare Bauteil ist seinerseits gegen ein Verdrehen geführt. Somit kann das axial verschiebbare Bauteil keine Drehbewegung ausführen. Durch diese Kombination einer Führung des Einsatzes gegen eine axiale Verschiebung und einer Führung des Bauteils gegen ein Verdrehen wird ein Mechanismus geschaffen, der eine Rotationsbewegung in eine axiale Verschiebung umsetzt.

Bei einer besonders günstigen Ausführung der Erfindung weist die Betätigungsanordnung ein Führungsbauteil auf, das drehfest mit einem Gehäuse direkt oder indirekt verbunden ist.

Das Führungsbauteil kann das verschiebbare Bauteil gegen eine Verdrehung führen und/oder kann den Einsatz gegen eine Verschiebung führen. Bei einer besonders vorteilhaften Ausführung der Erfindung wird ein Führungsbauteil eingesetzt, um sowohl das verschiebbare Bauteil als auch den Einsatz zu führen.

Bei dem Führungsbauteil kann es sich um ein hohlzylinderartiges Bauteil handeln. Das Führungsbauteil kann in einen Abschnitt des Gehäuses eingeführt und gegebenenfalls zusätzlich mit einem Befestigungsmittel fixiert werden. Dadurch wird ein Verdrehen des Führungsbauteils verhindert. Das Führungsbauteil liegt vorzugsweise an einem Anschlag des Gehäuses an, so dass ein Verschieben des Führungsbauteils verhindert wird.

Das Führungsbauteil weist vorzugsweise eine Querschnittsveränderung, insbesondere eine Nut entlang seines Umfanges auf, in das ein Vorsprung des Einsatzes eingreift. Der Vorsprung wird bei einer Verdrehung des Einsatzes entlang der Nut geführt. Dadurch wird eine axiale Verschiebung des Einsatzes verhindert.

Bei einer günstigen Variante der Erfindung weist das Führungsbauteil ergänzend oder alternativ hierzu einen sich in Axialrichtung erstreckenden Vorsprung oder eine sich in Axialrichtung erstreckende Vertiefung, insbesondere eine Aussparung auf, in der ein Vorsprung des verschiebbaren Bauteils geführt wird. Eine Verdrehung des verschiebbaren Bauteiles wird dadurch verhindert. Die Aussparung ist vorzugsweise als ein in axialer Richtung verlaufender Schlitz ausgeführt.

Die Betätigungsanordnung weist vorzugsweise ein Spannelement zur Rückstellung des Drehgriffes auf. Das Spannelement kann als eine Feder ausgeführt sein, wobei sich insbesondere eine Schenkelfeder eignet. Vorzugsweise wirkt das Spannelement zwischen dem Führungsbauteil und dem Einsatz. Dabei erweist es sich als günstig, wenn ein Teil des Spannelementes am Führungsbauteil befestigt ist und ein anderer Teil des Spannelementes durch Verdrehen des Einsatzes mitbewegt wird.

Im Falle einer Schenkelfeder erweist es sich als günstig, wenn ein Ende der Schenkelfeder in eine Öffnung des Führungsbauteils und das andere Ende in eine Öffnung des Einsatzes ragt. Der Abschnitt der Schenkelfeder im Führungsbauteil bleibt bei einer Verdrehung fixiert, während der Abschnitt, der in eine Öffnung des Einsatzes ragt, mitgedreht wird. Dadurch wird eine Federkraft aufgebaut. Nach Lösen der Tastbetätigung bewirkt diese Federkraft eine Rückstellung des Einsatzes und damit des Drehgriffes in die Ausgangsposition.

Bei einer günstigen Variante der Erfindung ist in dem verschiebbaren Bauteil ein Verstellelement zur Variation des Abstandes zum Auslöseelement angeordnet. Vorzugsweise handelt es sich dabei um eine Stellschraube mit einem Außengewinde, die in einem Innengewinde in einem Bereich des axial verschiebbaren Bauteiles positioniert ist. Diese Stellschraube kann beispielsweise mittels eines Innensechskantschlüssels verdreht werden. Auf diese Weise kann der Abstand des Verstellelementes zum Auslöseelement variiert werden. Somit ist es möglich, den Leerhub zu variieren.

Vorzugsweise ist der Drehgriff (4) in dem Einsatz (22) insbesondere über ein in dem Einsatz (22) angeordnetes Verbindungselement (23) befestigbar. Dabei handelt es sich bei einer günstigen Ausführung der Erfindung um eine Hohlschraube. Die Hohlschraube wird vorzugsweise innerhalb des verschiebbaren Bauteils angeordnet, wobei ein Bereich der Hohlschraube mit einem Außengewinde zum Griff ausgerichtet ist. Der Einsatz wird über diesen Bereich gestülpt. Der Einsatz weist achsmittig eine Öffnung auf, durch die das Außengewinde des Verbindungselementes hindurchragt. Über dieses Außengewinde wird der Drehgriff befestigt, der seinerseits vorzugsweise einen Bereich mit einem Innengewinde aufweist. Abschließend wird der Drehgriff mit einem Deckel verschlossen.

Weitere Merkmale und Vorteile der Erfindung ergeben sich aus der Beschreibung eines Ausführungsbeispiels anhand der Zeichnungen und aus den Zeichnungen selbst. Dabei zeigen:
- Figur 1: eine perspektivische Darstellung einer Selbstschlussarmatur,
- Figur 2: eine Schnittdarstellung der Betätigungsanordnung und eines Ventils,
- Figur 3a: eine Schnittdarstellung der Betätigungsanordnung in Ausgangsstellung,
- Figur 3b: eine Schnittdarstellung der Betätigungsanordnung vor Auslösungsbeginn,
- Figur 3c: eine Schnittdarstellung der Betätigungsanordnung nach einer Auslösung,
- Figur 4a: ein Führungsbauteil als perspektivische Darstellung,
- Figur 4b: ein Führungsbauteil als Schnittdarstellung,
- Figur 5a: ein verschiebbares Bauteil als perspektivische Darstellung,
- Figur 5b: ein verschiebbares Bauteil als Schnittdarstellung,
- Figur 6: ein Verstellelement,
- Figur 7a: ein Verbindungselement als perspektivische Darstellung,
- Figur 7b: ein Verbindungselement als Schnittdarstellung,
- Figur 8a: eine perspektivische Darstellung eines Einsatzes mit Blick auf die Innenseite,
- Figur 8b: eine perspektivische Darstellung eines Einsatzes mit Blick auf die Außenseite;
- Figur 9: ein Spannelement,
- Figur 10: eine perspektivische Darstellung eines Drehgriffs mit Blick auf die Außenseite,
- Figur 11: eine perspektivische Darstellung eines Deckels mit Blick auf die Innenseite.

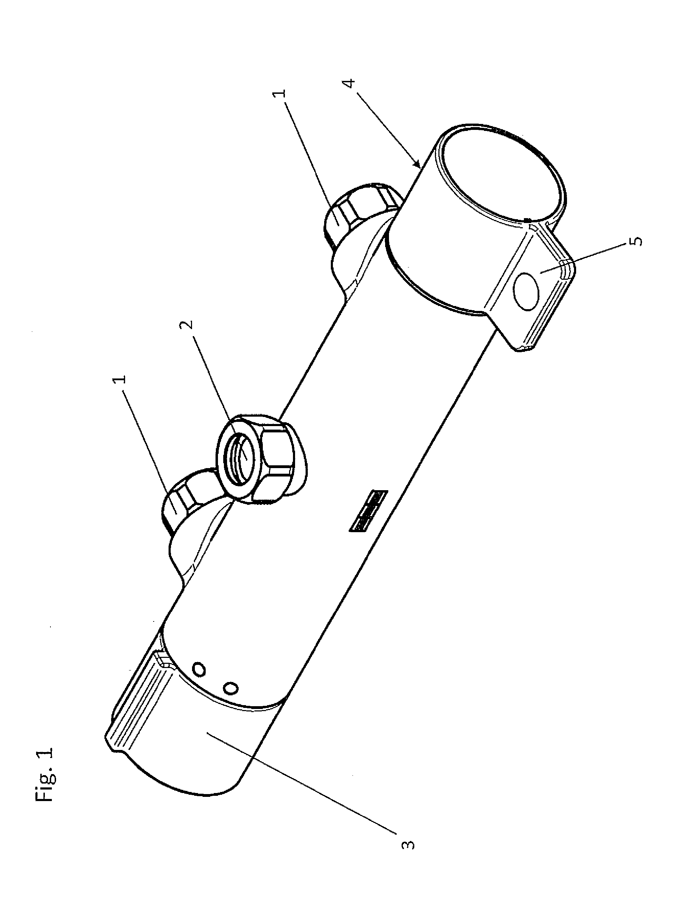

Figur 1 zeigt eine Selbstschlussarmatur mit zwei Wassereingängen 1 und einem Wasserausgang 2. Durch einen Wassereingang 1 wird Warmwasser zugeführt. Durch den anderen Wassereingang 1 wird Kaltwasser zugeführt. Mittels eines Temperaturwahlgriffs 3 kann die entsprechende gewünschte Wassertemperatur eingestellt werden.

Mittels eines Drehgriffs 4 wird der Wasserfluss ausgelöst. Der Drehgriff 4 umfasst einen Vorsprung 5 zur Tastbetätigung. Mit einem Finger kann auf den Vorsprung 5 ein Druck ausgeübt werden. Dabei verdreht sich der Drehgriff 4 und der Wasserfluss wird ausgelöst. Der Drehgriff 4 geht automatisch in seine Ausgangsstellung zurück. Nach einer bestimmten Zeit stoppt der Wasserfluss.

Im Ausführungsbeispiel handelt es sich bei der Selbstschlussarmatur um eine Selbstschluss-Thermostatbatterie, die als Wandbatterie ausgeführt ist. An den Wasserausgang 2 kann eine Handbrause oder ein Abgangsbogen angeschlossen werden.

Der Vorsprung 5 wirkt als Ventiltaste zur Auslösung eines Wasserflusses. Im Gegensatz zu herkömmlichen Armaturen wird der Wasserfluss nicht durch einen Druckknopf ausgelöst, sondern durch eine Tastbewegung, welche den Drehgriff 4 verdreht.

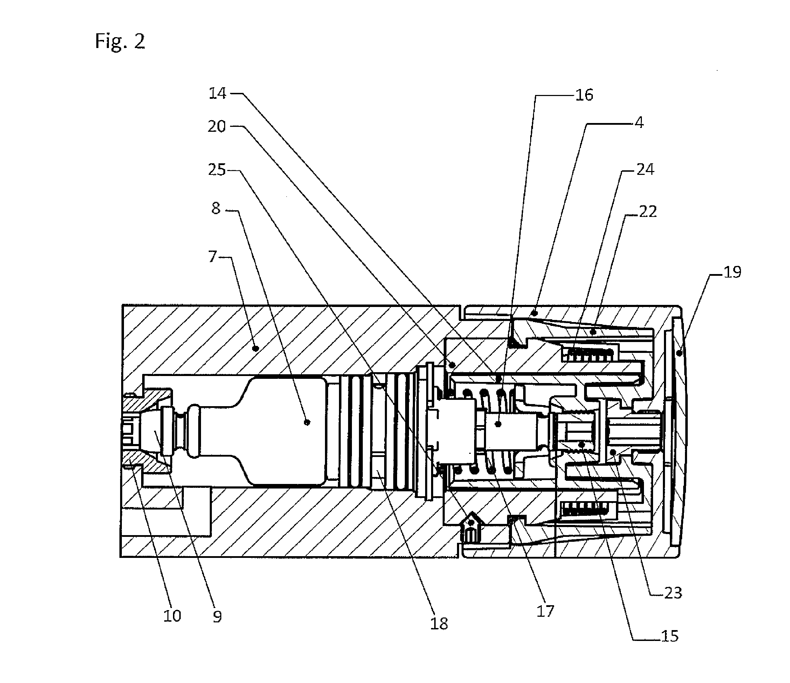

Figur 2 zeigt eine Schnittdarstellung der Betätigungsanordnung und des Ventils.

Dieser Teil der Selbstschlussarmatur dient der Auslösung des Wasserflusses und dem automatischen Schließen der Armatur. Die Selbstschlussarmatur umfasst ein Gehäuse 7. In dem Gehäuse 7 ist ein Selbstschlussfunktionsteil 8 angeordnet. Das Selbstschlussfunktionsteil 8 umfasst ein Hauptventil 9, dem ein Ventilsitz 10 zugeordnet ist.

Weiterhin umfasst das Selbstschlussfunktionsteil 8 ein Hilfsventil, welches in Figur 2 nicht dargestellt ist. Die Betätigungsanordnung umfasst einen Drehgriff 4. Der Drehgriff 4 wirkt mit einem axial verschiebbar angeordneten Bauteil 14 zusammen. In dem verschiebbaren Bauteil 14 ist ein Verstellelement 15 angeordnet.

Bei einer Betätigung des Drehgriffs 4 durch eine Tastbetätigung des Vorsprungs 5 führt der Drehgriff 4 eine Rotationsbewegung aus, die in eine axiale Verschiebung des Bauteils 14 umgesetzt wird. Das Bauteil 14 verschiebt sich dabei mit Blick auf die Zeichnung von rechts nach links, sodass das Verstellelement 15 auf ein Auslöseelement 16 drückt. Durch Drücken des Auslöseelements 16 wird der Wasserfluss ausgelöst. Ein Federelement 17 ist zwischen dem Auslöseelement 16 und einer Selbstschlusskartusche 18 angeordnet. Die Selbstschlusskartusche 18 ist fest mit dem Gehäuse 7 verbunden. Der Drehgriff 4 ist mit einem Deckel 19 verschlossenen.

Das axial verschiebbare Bauteil 14 wirkt mit einem Einsatz 22 zusammen. Der Einsatz 22 ist drehfest mit dem Drehgriff 4 verbunden. Der Einsatz 22 ist zwischen dem Drehgriff 4 und dem verschiebbaren Bauteil 14 angeordnet. Beim Verdrehen des Drehgriffs 4 dreht sich der Einsatz 22 mit und wirkt auf das verschiebbare Bauteil 14 ein, sodass dieses in axialer Richtung verschoben wird. In dem Einsatz 22 ist ein Verbindungselement 23 angeordnet. Auf dem Verbindungselement 23 ist der Drehgriff 4 befestigt. Ein Spannelement 24 sorgt für eine automatische Rückstellung des Drehgriffes nach seiner Betätigung.

Das axial verschiebbare Bauteil 14 ist in einem Führungsbauteil 20 angeordnet. Das Führungsbauteil 20 ist mittels eines Fixierelementes 25 am Gehäuse 7 festgelegt. Bei dem Fixierelement 25 handelt es sich um einen Gewindestift.

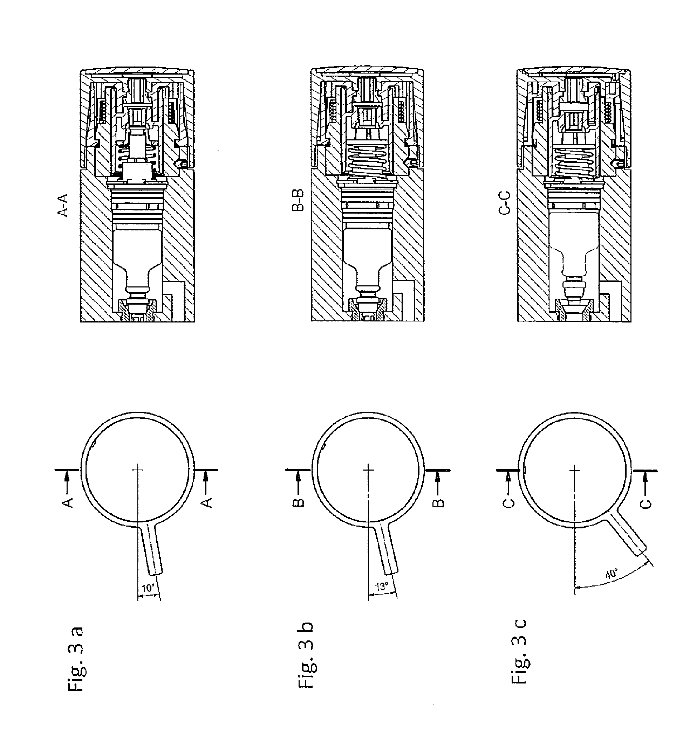

Die Figuren 3a, 3b und 3c zeigen die Betätigungsanordnung und das Ventil während unterschiedlicher Stellungen des Drehgriffes 4. Bei Figur 3a befindet sich die Betätigungsanordnung in Ausgangsstellung und das Hauptventil 9 sitzt in seinem Ventilsitz 10, sodass kein Wasserfluss erfolgt.

Bei der in Figur 3b dargestellten Position befindet sich die Betätigungsanordnung in einer Stellung kurz vor Auslösebeginn. Das Verstellelement 15, das in dem verschiebbaren Bauteil 14 angeordnet ist, liegt am Auslöseelement 16 an.

Figur 3c zeigt die Betätigungsanordnung und das Ventil in ausgelöster Stellung. Dabei hat sich das Hauptventil 9 aus seinem Sitz 10 gelöst und gibt einen Wasserfluss frei. Durch Verdrehen des Drehgriffs 4 wurde auch der Einsatz 22 mit gedreht. Der Einsatz 22 hat auf das verschiebbare Bauteil 14 eingewirkt und dieses mit Blick auf die Figur von rechts nach links verschoben. Dadurch drückte das im verschiebbaren Bauteil 14 angeordnete Verstellelement das Auslöseelement 16. Mittels eines nicht dargestellten Mechanismusses führt das Eindrücken des Auslöseelements 16 zu einer Heraushebung des Hauptventils 9 aus dem Ventilsitz 10. Dies wird über ein Hilfsventil bewerkstelligt. Solche Mechanismen sind aus dem oben zitierten Stand der Technik bekannt.

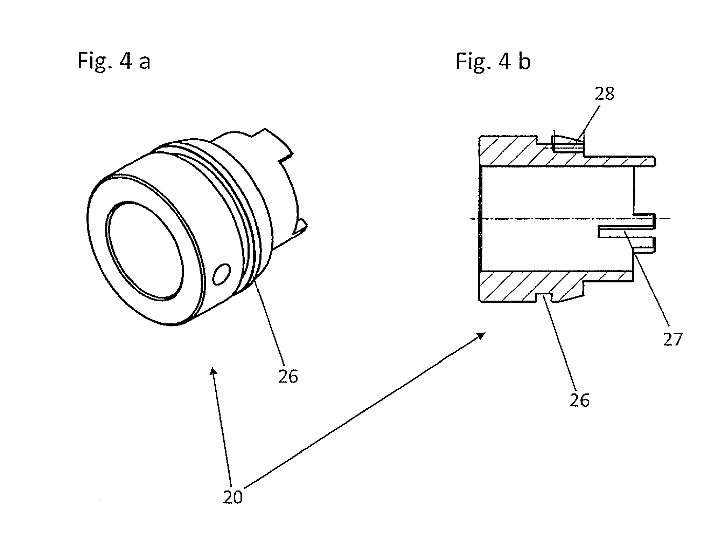

Figur 4a zeigt das Führungsbauteil 20 als perspektivische Darstellung und Figur 4b als Schnittdarstellung. Das Führungsbauteil 20 ist hohlzylinderartig ausgebildet. Es weist eine Nut 26 auf, die am äußeren Umfang des Führungsbauteils 20 umläuft. Weiterhin weist das Führungsbauteil 20 eine Aussparung 27 auf, die als axiale Führung für das verschiebbare Bauteil 14 dient. In einer Öffnung 28 wird ein Abschnitt des Spannelements 24 angeordnet.

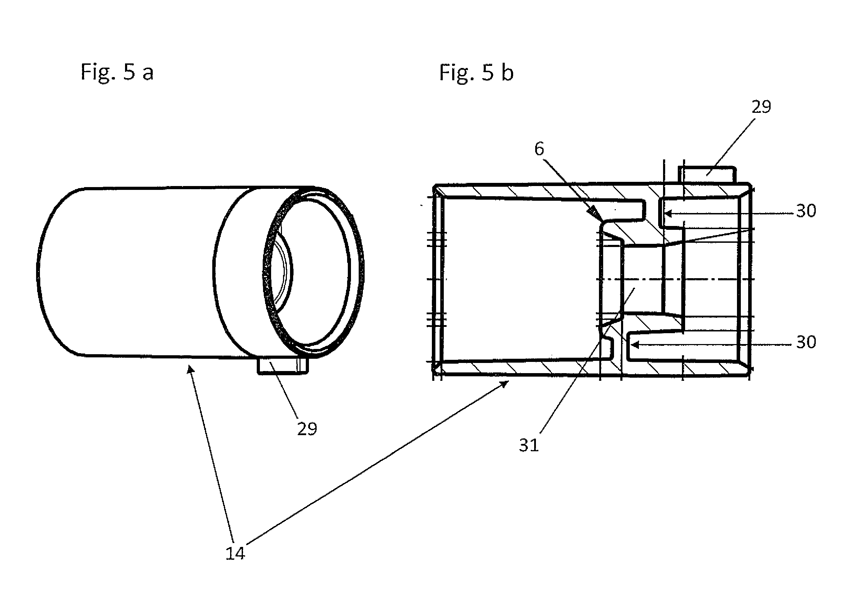

Die Figur 5a zeigt das verschiebbare Bauteil 14 als perspektivische Darstellung und Figur 5b als Schnittdarstellung. Das verschiebbare Bauteil 14 ist hohlzylinderartig ausgebildet und weist an seiner Außenseite einen in axialer Richtung verlaufenden Vorsprung 29 auf. Im Innern des hohlzylinderartigen verschiebbaren Bauteils 14 ist ein Bereich 6 angeordnet, der ansteigende Flächen 30 aufweist. Diese verlaufen spiralartig steigend an der inneren Wandung des Bauteils 14. In einer Bohrung 31, die ein Innengewinde aufweist, wird ein in Figur 5b nicht dargestelltes Verstellelement 15 eingeschraubt.

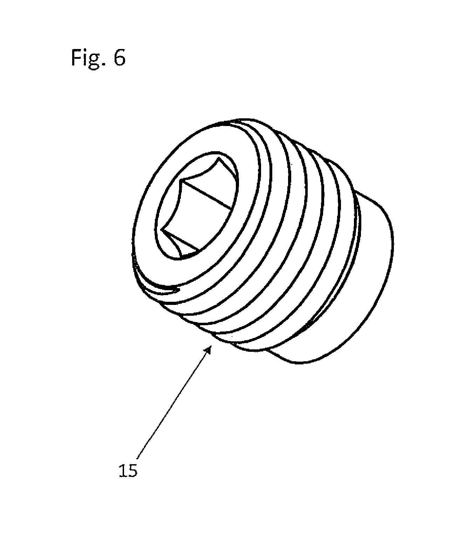

Figur 6 zeigt das Verstellelement 15, das ein Außengewinde und eine Innensechskantöffnung aufweist. Das Verstellelement 15 ist als Stellschraube ausgebildet.

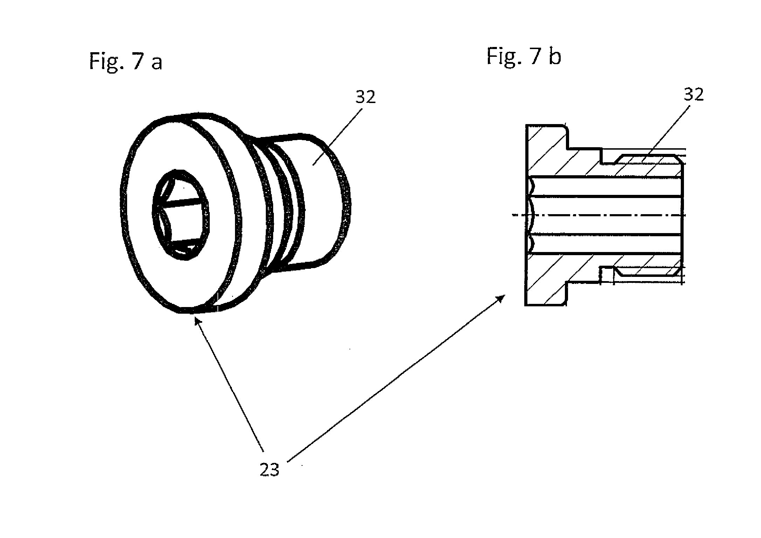

Figur 7a zeigt das Verbindungselement 23 als perspektivische Darstellung und Figur 7b als Schnittdarstellung. Das Verbindungselement 23 weist ein Außengewinde 32 auf, das zum Befestigen des Drehgriffs 4 dient.

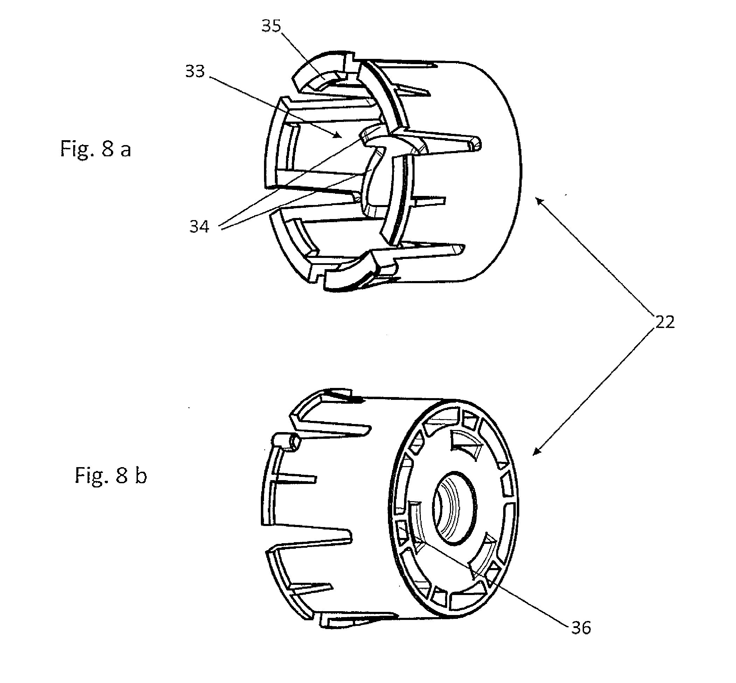

Figur 8a zeigt den Einsatz 22 mit Blick von innen und Figur 8b von außen. Der Einsatz 22 weist einen nach innen ragenden Bereich 33 auf, der hülsenartig ausgebildet ist. An den Stirnseiten weist der hülsenartige Bereich ansteigende Flächen 34 auf. Weiterhin weist der Einsatz 22 radial verlaufende Vorsprünge 35 auf, welche nach dem Zusammenbau der Vorrichtung in die Nut 26 des Führungsbauteils 20 eingreifen. Bei einer Verdrehung des Drehgriffs 4 dreht sich der Einsatz 22 mit, wobei die Vorsprünge 35 in der Nut 26 des Führungsbauteils 20 geführt werden. Vorzugsweise sind die Berührungsflächen zwischen den Vorsprüngen 35 und den Wänden der Nut 26 gefettet.

Bei einem Verdrehen des Einsatzes 22 wird eine axiale Verschiebung durch die Führung verhindert. Die ansteigenden Flächen 34 des Einsatzes berühren die ansteigenden Flächen 30 des verschiebbaren Bauteils 14. Da nur das verschiebbare Bauteil 14 bei Einwirkung durch die ansteigenden Flächen 34 ausweichen kann, verschiebt sich das Bauteil 14 in axialer Richtung. In einer Öffnung 36 des Einsatzes 22 wird ein Abschnitt des Spannelements 24 angeordnet, der in den Figuren 8a und 8b nicht dargestellt ist.

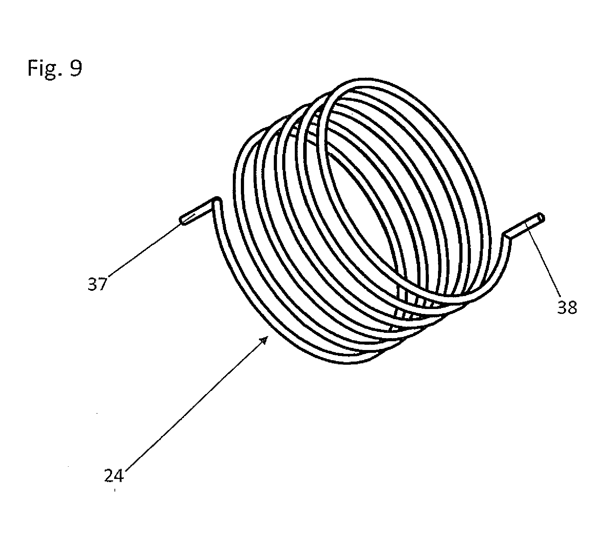

Figur 9 zeigt das Spannelement 24, das im Ausführungsbeispiel als Schenkelfeder ausgebildet ist. Das Spannelement 24 weist einen Abschnitt 37 auf, der in der Öffnung 28 des Führungselementes 20 angeordnet wird. Weiterhin weist das Spannelement 24 einen Abschnitt 38 auf, der in der Öffnung 36 des Einsatzes 22 angeordnet wird.

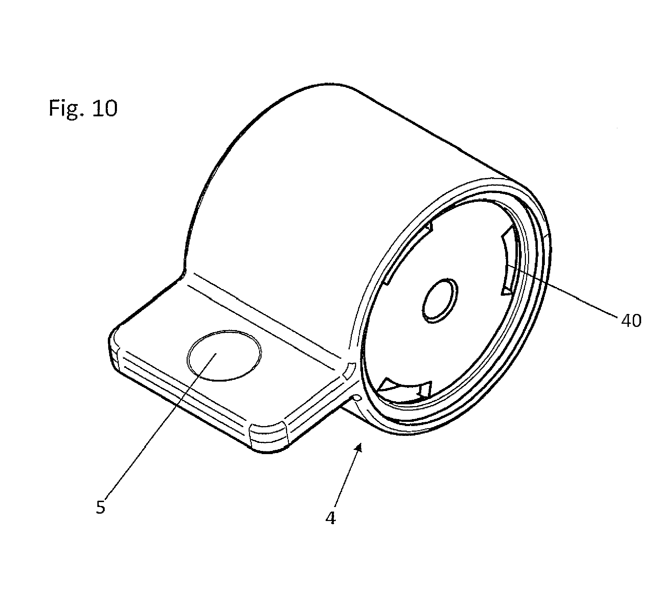

Figur 10 zeigt den Drehgriff 4 als perspektivische Darstellung. Der Vorsprung 5 für die Tastbetätigung ist einstückig mit dem Drehgriff 4 ausgebildet.

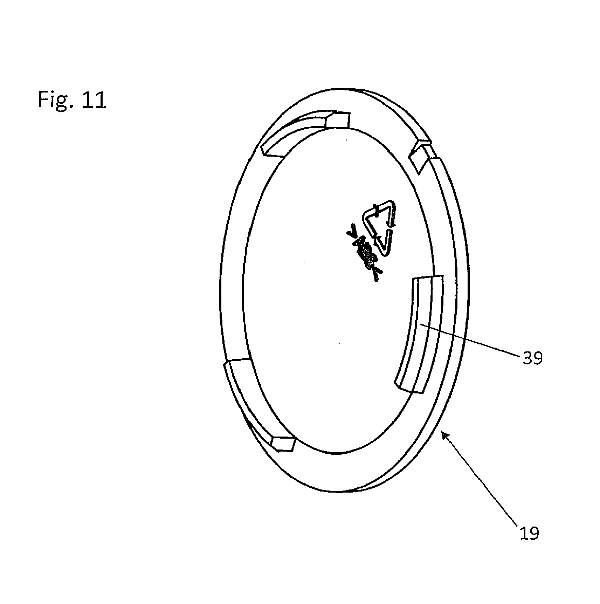

Der Drehgriff 4 wird mit einem in Figur 11 dargestellten Deckel 19 verschlossen.

## Patentansprüche

1. Selbstschlussarmatur mit einem Auslöseelement zur Auslösung eines Wasserflusses und einer Betätigungsanordnung zur Betätigung des Auslöseelements, **dadurch gekennzeichnet, dass** die Betätigungsanordnung einen Drehgriff (4) mit einer Drehachse aufweist, der mit einem in einer Richtung fluchtend oder parallel zur Drehachse verschiebbar angeordneten Bauteil (14) zum Drücken und/oder Ziehen eines Auslöseelements (16) zusammenwirkt.

2. Selbstschlussarmatur nach Anspruch 1, **dadurch gekennzeichnet, dass** am Drehgriff (4) eine Querschnittsänderung, insbesondere ein Vorsprung (5) oder eine Vertiefung zur Tastbetätigung angeordnet ist.

3. Selbstschlussarmatur nach Anspruch 1 oder 2, **dadurch gekennzeichnet, dass** das verschiebbare Bauteil (14) einen Bereich (6) mit mindestens einer ansteigenden Fläche (30) aufweist.

4. Selbstschlussarmatur nach einem der Ansprüche 1 bis 3, **dadurch gekennzeichnet, dass** die Betätigungsanordnung einen Einsatz (22) aufweist, der zwischen dem Drehgriff (4) und dem verschiebbaren Bauteil (14) angeordnet ist.

5. Selbstschlussarmatur nach Anspruch 4, **dadurch gekennzeichnet, dass** der Einsatz (22) einen inneren Bereich (33) aufweist, der in das verschiebbare Bauteil (14) eingreift.

6. Selbstschlussarmatur nach Anspruch 4 oder 5, **dadurch gekennzeichnet, dass** der Einsatz (22) einen Bereich (33) mit mindestens einer ansteigende Fläche (34) aufweist.

7. Selbstschlussarmatur nach Anspruch 6, **dadurch gekennzeichnet, dass** mindestens eine ansteigende Fläche (34) des Einsatzes (22) mit mindestens einer ansteigenden Fläche (30) des verschiebbaren Bauteils (14) zusammenwirkt.

8. Selbstschlussarmatur nach einem der Ansprüche 1 bis 7, **dadurch gekennzeichnet, dass** die Betätigungsanordnung gegenüber dem verschiebbaren Bauteil (14) geführt ist, dass die Führung direkt oder indirekt, durch Formschluss und/oder durch ein Führungsbauteil (20) erfolgt.

9. Selbstschussarmatur nach Anspruch 8, **dadurch gekennzeichnet, dass** das Führungsbauteil (20) eine Querschnittsänderung, insbesondere eine umlaufende Nut (26) für eine radiale Führung aufweist.

10. Selbstschlussarmatur nach Anspruch 8 oder 9, **dadurch gekennzeichnet, dass** das Führungsbauteil (20) einen sich in Axialrichtung erstreckenden Vorsprung oder eine sich in Axialrichtung erstreckende Vertiefung, insbesondere eine Aussparung (27) für eine axiale Führung aufweist.

11. Selbstschlussarmatur nach einem der Ansprüche 1 bis 10, **dadurch gekennzeichnet, dass** die Betätigungsanordnung ein Spannelement (24) zur Rückstellung des Drehgriffs (4) aufweist.

12. Selbstschlussarmatur nach Anspruch 11, **dadurch gekennzeichnet, dass** das Spannelement (24) zwischen dem Führungsbauteil (20) und dem Einsatz (22) wirkt.

13. Selbstschlussarmatur nach einem der Ansprüche 1 bis 12, **dadurch gekennzeichnet, dass** in dem verschiebbaren Bauteil (14) ein Verstellelement (15) zur Variation des Abstandes zum Auslöseelement (16) angeordnet ist.

14. Selbstschlussarmatur nach einem der Ansprüche 1 bis 13, **dadurch gekennzeichnet, dass** der Drehgriff (4) in dem Einsatz (22) insbesondere über ein in dem Einsatz (22) angeordnetes Verbindungselement (23) befestigbar ist.
